# EUROPÄISCHE PATENTSCHRIFT

(11) **EP 3 607 276 B1**
(45) Veröffentlichungstag und Bekanntmachung des Hinweises auf die Patenterteilung: **22.06.2022**
(21) Anmeldenummer: 18719765.2
(22) Anmeldetag: 06.04.2018
(51) Int. Cl.: G01D 11/30, E04G 21/04, B66C 13/44, B66C 13/46

(54) **DREHWINKELSENSORHALTESYSTEM**
ROTATIONAL ANGLE SENSOR HOLDING SYSTEM
SYSTÈME DE MAINTIEN POUR CAPTEUR D'ANGLE DE ROTATION

(30) Priorität: 06.04.2017 DE 102017107430; 17.11.2017 DE 202017106990 U
(43) Veröffentlichungstag der Anmeldung: 12.02.2020
(73) Patentinhaber: Schwing GmbH, 44653 Herne (DE)
(72) Erfinder: SCHEFFER, Heinrich, 45721 Haltern am See (DE); HAUSCHILD, Lisa, 44866 Bochum (DE); SEGSCHNEIDER, Bernd, 44227 Dortmund (DE)
(74) Vertreter: Schneiders & Behrendt Bochum
(86) Internationale Anmeldenummer: PCT/EP2018/058887
(87) Internationale Veröffentlichungsnummer: WO 2018/185299

(56) Entgegenhaltungen:
- WO-A1-2016/198376
- DE-A1-102006 031 718
- DE-A1-102015 108 473
- DE-A1-102016 010 052
- DE-B3-102014 011 078

## Beschreibung

Die Erfindung betrifft ein Haltesystem für eine Drehwinkelsensoranordnung, zur Halterung an einer Arbeitsmaschine, wobei die Drehwinkelsensoranordnung zur Erfassung eines Knickwinkels an einem Knickgelenk zwischen zwei Maschinenteilen ausgebildet ist, mit einem ersten Halteelement zur Kopplung an einem ersten Maschinenteil, wobei das Haltelement einen Drehwinkelsensor der Drehwinkelsensoranordnung aufweist, einem zweiten Halteelement zur Kopplung mit einem zweiten Maschinenteil, wobei das zweite Halteelement mindestens ein mit dem Drehwinkelsensor korrespondierendes Positionsgeberelement der Drehwinkelsensoranordnung aufweist, wobei der Drehwinkelsensor dazu ausgebildet ist, eine Verdrehung des Positionsgeberelements gegenüber dem Drehwinkelsensor zu erfassen.

Die WO 2016/198376 A1 betrifft eine Drehwinkelsensoranordnung an einer Arbeitsmaschine, wobei die Drehwinkelsensoranordnung zur Erfassung eines Knickwinkels an einem Knickgelenk zwischen zwei Maschinenteilen ausgebildet ist, mit einem Halteelement zur Kopplung an einem ersten Maschinenteil, wobei das Haltelement einen Drehwinkelsensor der Drehwinkelsensoranordnung aufweist, mit einem mit dem Drehwinkelsensor korrespondierenden Positionsgeberelement der Drehwinkelsensoranordnung, wobei der Drehwinkelsensor dazu ausgebildet ist, eine Verdrehung des Positionsgeberelements gegenüber dem Drehwinkelsensor zu erfassen.

Die DE 10 2015 108473 A1 betrifft einen Großmanipulator mit einem Knickmast, der zwei oder mehr Mastarme umfasst, wobei die Mastarme über Knickgelenke mit dem jeweils benachbarten Mastbock oder Mastarm mittels je eines Schwenkantriebs schwenkbeweglich verbunden sind, mit einer die Antriebe ansteuernden Steuereinrichtung für die Mastbewegung und mit einer Mastsensorik zur Erfassung eines Schwenkwinkels zumindest eines Knickgelenks.

DE 10 2014 007 071 A1 offenbart einen Großmanipulator mit einem ausfaltbaren Knickmast, der einen um eine Hochachse drehbaren Drehschemel und eine Mehrzahl von Mastsegmenten aufweist, mit einem berührungslos arbeitenden Drehwinkelsensor zur Erfassung des Knickwinkels zwischen zwei benachbarten Mastsegmenten oder zwischen einem Mastsegment und dem benachbarten Drehschemel, wobei der Drehwinkelsensor durch ein Halteelement, bevorzugt ein Winkelblech, an einem Mastsegment angeordnet ist.

DE 10 2015 218 425 A1 offenbart eine Sensorvorrichtung zum Erfassen einer Rotation mit einem Positionsgeber mit einem Wellenelement, wobei das Wellenelement ein Magnetelement enthält, und mit einem Sensorelement zum Erfassen der Rotation des Magnetelements und mit einem Gehäuseteil, wobei das Sensorelement im Gehäuseteil angeordnet ist, wobei das Gehäuseteil und das Wellenelement einen ersten Lagerabschnitt aufweisen, an dem das Wellenelement am Gehäuseteil anliegt, um den Positionsgeber am Gehäuseteil zu lagern. Der Lagerabschnitt soll hier zum Wellenende hin verjüngend geformt sein, wobei das Gehäuseteil und das Wellenelement außerhalb des Lagerabschnitts keinen Kontakt haben.

US 9 134 200 B2 offenbart eine Fahrzeugchassis-Sensoranordnung mit einem Gehäuseelement, das einen Sensorpatronenschlitz definiert, einer drehbaren Welle mit einem Magneten, die in einer Hülse gehalten wird, und einem drehbaren Arm, der mit der Welle gekoppelt ist. Eine Sensorpatrone ist in dem Schlitz durch das Innere einer Steckerbuchse und eine Öffnung zwischen dem Schlitz und der Steckerbuchse montiert. Eine Platte an der Sensorpatrone deckt die Öffnung ab. Die Sensorpatrone enthält eine Anschlussleiste und eine separate Platine, die an der Anschlussleiste befestigt ist. Die Platine enthält den Sensor. Verformbare Pfosten auf dem Anschlusskopf und der Sensoranordnung erstrecken sich durch entsprechende Öffnungen in der Platine und dem Anschlusskopf, um die Platine und die Sensorpatrone am Anschlusskopf bzw. der Sensoranordnung zu befestigen.

DE 10 2007 028 265 A1 offenbart einen Drehwinkelgeber zur Bestimmung eines Drehwinkels zwischen einem Hebel und einem Träger des Hebelsystems bei dem ein Sensorelement mit seinem Sensorgehäuse im Bereich der Drehachse des Hebels am Träger angeordnet ist und wobei ein Verbindungselement mit seinem einen Ende drehbar am Sensorgehäuse oder dem Träger gelagert ist und mit seinem anderen Ende fest mit dem Hebel verbunden ist, wobei das Sensorelement die Position des Verbindungselementes oder eines daran angeordneten Target relativ zum Sensorgehäuse bzw. Sensorelement detektiert.

DE 42 16 344 A1 offenbart einen Drehwinkelsensor mit einer außenliegenden radialen Lagerung einer Drehwelle, die sich aus einem in ein hutförmiges Gehäuse eingesetzten Lageraußenring und einem einstückig an die Drehwelle angeformten Lagerinnenring zusammensetzt.

DE 196 14 818 A1 offenbart einen Drehgeber für einen Zylinder einer Druckmaschine, mit einem an dem Zylinder verdrehsicher gegenüber einer Drehachse des Zylinders angeordneten Messmittel und einem Referenzmittel, wobei die Stellung des Messmittels relativ zum Referenzmittel erfasst und daraus die Winkellage des Zylinders gegenüber einem Gestell der Druckmaschine bestimmt wird, wobei das Referenzmittel auf dem Zylinder um die Drehachse des Zylinders drehbar gelagert ist und bei einer Änderung der Winkellage des Zylinders durch ein Haltemittel in einer gegenüber dem Gestell der Druckmaschine wenigstens im Wesentlichen unveränderten Winkellage gehalten wird.

Um beispielsweise eine sichere, einfache und genaue Bedienung eines als Knickmast ausgebildeten Großmanipulators zu ermöglichen, wird im Stand der Technik auch vorgeschlagen, zur Bestimmung des Faltzustands des Knickmasts, der Dämpfung von Mastschwingungen, der Lastmomentbegrenzung oder aber auch zur Koordinatensteuerung, den relativen momentanen Knickwinkel der einzelnen Mastsegmente zu messen.

Die Knickwinkelerfassung kann beispielsweise durch mechanische Drehwinkelmesssysteme erfolgen. Dies ist jedoch häufig zu ungenau oder zu teuer. Insbesondere ist eine derartige Knickwinkelerfassung schwierig, wenn bei einem Großmanipulator mit einer Dickstoffpumpe, ein Dickstoffförderrohr durch die Knickgelenke geführt wird. Die mechanische Messung mit einem Drehwinkelmesser ist dann nur möglich, wenn zusätzliche mechanische Umlenkmechanismen eingebaut werden.

Es ist zudem bekannt, zur Winkelmessung die lineare Auslenkung der Antriebsaggregate, mit denen die Mastsegmente gegenüber einem jeweils benachbarten Segment oder gegenüber dem Drehschemel verschwenkt werden, zu messen und die gemessene Auslenkung dann in den zugehörigen Drehwinkel des Gelenks umzurechnen. Nachteilig hierbei ist allerdings, dass geeignete Messsysteme aufwendig sind und unter Umständen eine völlige Neukonstruktion/-dimensionierung der Antriebsaggregate erforderlich machen.

Um den Knickwinkel zu erfassen, sind ferner auf Drehpotentiometern basierende Winkelsensoren bekannt. Die Potentiometermessung setzt Drehbewegungen in einen Widerstandswert um und hat den Vorteil, dass sofort nach dem Einschalten ein absoluter Wert zur Verfügung steht. Nachteilig hierbei ist allerdings der mechanische Verschleiß. Durch diesen verändert sich mit der Zeit der Widerstand, und damit werden die Messergebnisse verfälscht. Auch ist bei derartigen Messungen ein Versatz der Bauteile zueinander nur in sehr geringen Maßen tolerierbar.

Aus der DE 10 2014 007 071 A1 ist ein Haltesystem für eine Drehwinkelsensoranordnung der eingangs genannten Art zur Halterung an einem Großmanipulator bekannt. Nachteilig an dem bekannten Haltesystem ist, dass die beschriebenen Winkelbleche zur Halterung des Drehwinkelsensors schwierig zu positionieren sind, denn sowohl der radiale Versatz der Mittelachsen als auch der Abstand von Drehwinkelsensor und Positionsgeberelement müssen sehr präzise eingestellt werden. Außerdem ist die Halterung sehr empfindlich gegenüber Stößen, wodurch die Halterung leicht verstellt oder verbogen werden kann. Je nach Einbauposition an der Arbeitsmaschine müssen zudem unterschiedliche Winkelbleche vorgesehen werden, wodurch ein hoher produktionstechnischer Aufwand und Lagerhaltungskosten bei der Bevorratung der unterschiedlichen Teile entstehen. Für einige Einbausituationen ist es zudem schwierig, überhaupt ein passendes Winkelblech vorzusehen. Außerdem sind begehbare Bereiche an der Arbeitsmaschine für die beschriebenen Winkelbleche ungeeignet, da Halter und Sensor durch unsachgemäße Belastung verbiegen bzw. Schaden nehmen können.

Vor diesem Hintergrund ist es Aufgabe der Erfindung, ein verbessertes Haltesystem für eine Drehwinkelsensoranordnung bereitzustellen. Insbesondere soll ein Haltesystem für eine Drehwinkelsensoranordnung angegeben werden, das eine einfache und präzise Ausrichtung der Sensoranordnung (Drehwinkelsensor und Positionsgeberelement) ermöglicht. Das Haltesystem soll zudem einfach im Aufbau, universell einsetzbar, robust und kostengünstig herstellbar sein. Für die präzise Ausrichtung der Sensoranordnung stehen insbesondere die axiale Ausrichtung, der Abstand und die Parallelität des Drehwinkelsensors und des Positionsgeberelements im Vordergrund.

Diese Aufgabe löst die Erfindung ausgehend von einem Haltesystem der eingangs genannten Art dadurch, dass das erste Halteelement den Drehwinkelsensor mittels einer zwischen dem erstem Halteelement und dem zweiten Halteelement gebildeten Führung drehbar zum Positionsgeberelement am zweiten Halteelement führt.

Eine solche Führung stellt die präzise Ausrichtung der Sensoranordnung sicher. Insbesondere die axiale Ausrichtung, aber auch der Abstand, sowie die Parallelität des Drehwinkelsensors und des Positionsgeberelements werden durch die Führung zwischen dem ersten Halteelement und dem zweiten Halteelement sichergestellt. Durch die Führung zwischen dem ersten und dem zweiten Halteelement kann ein definierter Abstand zwischen dem Drehwinkelsensor und dem Positionsgeberelement sichergestellt werden. Dieser Abstand zwischen Drehwinkelsensor und Positionsgeberelement beträgt vorzugsweise 1 bis 9 mm, weiter vorzugsweise 4,5 mm. Somit kann auf einfache Art und Weise eine präzise Ausrichtung der Sensoranordnung sichergestellt werden. Das erfindungsgemäße Haltesystem ist sehr einfach aufgebaut und universell einsetzbar. Durch die erfindungsgemäße Führung ist das Haltesystem robust und außerdem kostengünstig herstellbar.

Erfindungsgemäß ist vorgesehen, dass eines der beiden Halteelemente als Führung eine Nut aufweist, während das andere Halteelement als Führung mindestens einen in die Nut eingreifenden Vorsprung aufweist. Die Bildung einer Nut als Führung in einem der Halteelemente und das Vorsehen mindestens eines in die Nut eingreifenden Vorsprungs stellt eine einfache Möglichkeit dar, eine genaue und sichere Führung zwischen den beiden Halteelemente auszugestalten. Der Vorsprung kann als Feder, Nabe oder Kragen ausgebildet sein.

Die Erfindung sieht vor, dass eines der beiden Halteelemente mindestens zwei Halteelementteile umfasst, die an dem anderen Halteelement anordbar sind und das letztere Halteelement formschlüssig umschließen. Die mehrteilige Ausbildung eines Halteelementes erleichtert die Montage an dem anderen Halteelement, sodass ein Formschluss zwischen den Halteelementen bei der Montage einfach und sicher herstellbar ist.

Vorteilhafte Ausgestaltungen und Weiterbildungen der Erfindung ergeben sich aus den abhängigen Ansprüchen.

Eine bevorzugte Ausführung sieht vor, dass die Halteelementteile als Halbschalen ausgebildet sind. Die Ausgestaltung der Halteelementteile als Halbschalen bietet die Möglichkeit einer einfachen Montage möglichst weniger Teile, um eine robuste Führung zwischen den Halteelementen herzustellen.

In einer weiter bevorzugten Variante ist vorgesehen, dass eines der beiden Halteelemente mit einem Mitnehmerhebel verbunden ist. Über den an dem einen Halteelement angeordneten Mitnehmerhebel lässt sich eine Drehbewegung eines Maschinenteils einfach auf das Halteelement übertragen, sodass die Position zur Anordnung des Haltesystems flexibel wählbar ist.

Besonders vorteilhaft ist die Weiterbildung, dass der Mitnehmerhebel ein Langloch aufweist. Die Ausbildung eines Langlochs am Mitnehmerhebel bildet eine einfache Möglichkeit, ein Befestigungselement zur Kopplung des Mitnehmerhebels mit einem Maschinenteil am Mitnehmerhebel sicher zu führen. Auf diese Weise können sich ändernde Abstände zwischen Haltelement und Befestigungselement durch die Drehbewegung der Maschinenteile zueinander ausgeglichen werden.

Weiter vorteilhaft ist die Ausgestaltung, dass ein Mitnehmerstift in dem Langloch am Mitnehmerhebel geführt ist, wobei der Mitnehmerstift mit einem der zwei Maschinenteile koppelbar ist. Das Haltesystem muss hierdurch nicht zwangsläufig unmittelbar an einer Gelenkachse zwischen den beiden Maschinenteilen montiert werden, sondern kann auch in einem geeigneten Bereich des Gelenks montiert werden. Aufgrund der Führung des Mitnehmerstifts in dem Mitnehmerhebel können sich bei der Drehbewegung der Maschinenteile zueinander je nach Einbauart ergebende Abstandsänderungen zwischen einem Haltelement und dem Mitnehmerstift durch das Langloch ausgeglichen werden.

Eine vorteilhafte Ausführungsform der Erfindung sieht vor, dass der Drehwinkelsensor berührungslos erfassend ausgebildet ist. Hierdurch ist eine genaue, preisgünstige und langlebige Drehwinkelmessung zwischen zwei zueinander verschwenkbaren Maschinenteilen möglich. Die mechanische Trennung der Sensoranordnung verhindert nicht nur mechanischen Verschleiß, sondern durch die berührungslose Winkelmessung sind zudem gewisse Toleranzen zwischen den Halteelementen zulässig, ohne dass sich diese negativ auf die Messwerte auswirken.

Eine bevorzugte Ausführung sieht vor, dass der Drehwinkelsensor als Hall-Sensor und das mindestens eine korrespondierende Positionsgeberelement als Magnet ausgebildet ist. Das von dem Magneten erzeugte magnetische Feld erzeugt abhängig von der Lage des Positionsgeberelements zum als Hall-Sensor ausgebildeten Drehwinkelsensor einen Magnetfluss durch den Drehwinkelsensor und hierdurch ein entsprechendes elektrisches Signal am Ausgang desselben. Durch die Verwendung eines Hall-Sensors kann auch bei rauer Umgebung, wie beispielsweise Feuchtigkeit, Staub oder Vibrationen, eine hohe Messgenauigkeit durch die Drehwinkelsensoranordnung sichergestellt werden. Auch der Einsatz bei beengten Einbauverhältnissen durch die sehr kompakten Abmessungen ist möglich. Außerdem lässt sich ein gewisser Versatz bzw. eine gewisse Abstandsänderung zwischen dem Positionsgeberelement und dem Drehwinkelsensor tolerieren, ohne dass es zu einer Verfälschung der Messwerte kommt. Insgesamt kann durch die Sensoranordnung eine sehr genaue und langlebige Winkelmessung sichergestellt werden.

Ferner ist Gegenstand der Erfindung eine Arbeitsmaschine, wobei die oben und im Folgenden näher beschriebene Arbeitsmaschine mindestens ein Haltesystem gemäß der vorherigen und nachfolgenden Beschreibung aufweist. Die erfindungsgemäße Arbeitsmaschine weist zumindest zwei zueinander verschwenkbare Maschinenteile auf, deren Knickwinkel zueinander durch die Drehwinkelsensoranordnung erfasst wird. Diese Arbeitsmaschine kann als Großmanipulator oder als andere Baumaschine, wie beispielsweise als Bagger, Planierraupe, Radlader, Stapler oder Kippmuldenfahrzeug ausgebildet sein. Bei einem Bagger kann beispielsweise die Aushubtiefe automatisch eingestellt und durch die Drehwinkelsensoranordnung überprüft werden. Bei einer Planierraupe kann durch die vom Haltesystem sicher gehaltene Drehwinkelsensoranordnung beispielsweise die Höhe des Planierschildes einfach eingehalten werden.

Eine bevorzugte Ausführung der Arbeitsmaschine sieht einem ausfaltbaren Knickmast vor, der einen um eine Hochachse drehbaren Drehschemel und eine Mehrzahl von Mastsegmenten umfasst, wobei die Mastsegmente über Knickgelenke mit dem jeweils benachbarten Mastsegment oder Drehschemel schwenkbeweglich verbunden sind, wobei das mindestens eine Haltesystem eine Drehwinkelsensoranordnung zur Erfassung eines Knickwinkels zwischen zwei benachbarten Mastsegmenten oder zwischen einem Mastsegment und dem benachbarten Drehschemel umfasst. Die Anordnung eines Haltesystems mit einer Drehwinkelsensoranordnung im Bereich des Knickgelenkes zwischen zwei benachbarten Mastsegmenten oder zwischen einem Mastsegment und dem benachbarten Drehschemel bietet die Möglichkeit die Bewegungen des Knickmastes durch die sicher und robust positionierte Drehwinkelsensoranordnung zuverlässig und fehlerfrei zu ermitteln, indem die Knickwinkel zwischen benachbarten Mastsegmenten oder zwischen einem Mastsegment und dem benachbarten Drehschemel einwandfrei erfasst werden.

In einer weiter bevorzugten Variante der Arbeitsmaschine sind ein Fahrgestell und mehrere Stützausleger vorgesehen, die jeweils am Fahrgestell angeordnet und von einer Fahrstellung ganz oder teilweise in eine Abstützstellung durch ein Knickgelenk ausklappbar sind, wobei die Stützausleger dazu ausgebildet sind, die fahrbare Arbeitsmaschine in einer Abstützstellung gegenüber dem Untergrund abzustützen, wobei das mindestens eine Haltesystem eine Drehwinkelsensoranordnung zur Erfassung eines Knickwinkels zwischen einem Stützausleger und dem Fahrgestell umfasst. Die Anordnung eines Haltesystems mit einer Drehwinkelsensoranordnung im Bereich des Knickgelenkes zwischen dem Fahrgestell und einem Stützausleger bietet die Möglichkeit die Öffnungswinkel der Stützausleger zuverlässig und fehlerfrei zu detektieren, um beispielsweise für eine Teilabstützung definierte Öffnungswinkel der Stützausleger einzustellen oder für eine Standsicherheitsüberprüfung den Ausfaltwinkel der Stützausleger zu erfassen.

Die Abstützung durch die Stützausleger trägt das Kippmoment auf einer vergrößerten Standfläche der Arbeitsmaschine ab und verhindert dadurch das Umschlagen des Fahrgestells. Dies ist von besonderer Bedeutung um eine sichere, einfache und genaue Bedienung eines Großmanipulators auf dem Fahrgestell zu ermöglichen. Hierzu werden vorzugsweise die Schwenkwinkel der Abstützungen, insbesondere der Stützausleger, erfasst. Hierdurch kann unter anderem sichergestellt werden, dass die Abstützungen auch tatsächlich bis zu der gewünschten Auslenkung ausgefahren worden sind, bevor mit dem Ausklappen eines Knickmastes begonnen wird. Zudem lassen sich Abspreizwinkel von nur teilweise ausgefahrenen Stützauslegern ermitteln, um basierend auf dieser Information den Arbeitsbereich des Knickmastes einzuschränken, weil bei nur teilweise ausgefahrenen Stützauslegern der volle Arbeitsbereich eines Knickmastes in der Regel nicht sicher genutzt werden kann. Die Schwenkwinkel der Stützausleger, die beispielsweise als Klappstützen ausgebildet sind, können vorteilhaft mittels der oben und im Folgenden beschriebenen Drehwinkelsensoranordnung erfasst werden.

Eine vorteilhafte Ausführung der Arbeitsmaschine ist, dass ein Haltesystem, derart gekoppelt ist, dass die Drehwinkelsensoranordnung den Knickwinkel zwischen zwei Maschinenteilen erfasst. Insbesondere die Erfassung des Knickwinkels zwischen zwei Maschinenteilen durch Anordnung der Drehwinkelsensoranordnung unmittelbar an einer Knickachse zwischen zwei benachbarten Maschinenteilen bietet den Vorteil, dass keine Umrechnung zur Ermittlung des Knickwinkels zwischen den Maschinenteilen erfolgen muss.

Eine bevorzugte Ausführung der Arbeitsmaschine ist, dass ein Haltesystem, derart gekoppelt ist, dass die Drehwinkelsensoranordnung den Knickwinkel an einem Anlenkpunkt, an dem Kinematikelemente aus der Gruppe Hydraulikzylinder, Druckstange und Umlenkhebel ausgebildete Antriebs- und Koppelglieder angelenkt sind, erfasst und derart ausgebildet ist, den absoluten Knickwinkel zwischen zwei Maschinenteilen umzurechnen. Ist eine direkte bzw. unmittelbare Winkelmessung an der Knickachse zwischen den Maschinenteilen nicht möglich, da durch das Knickgelenk beispielsweise bei einer Betonpumpe ein Förderrohr geführt wird, kann die Drehbewegung an einem der Anlenkpunkte der Antriebs- und Koppelglieder ermittelt werden und in den absoluten Knickwinkel des Knickgelenks umgerechnet werden. Beispielsweise handelt es sich bei den Anlenkpunkten im Falle eines Knickmastes um die Stellen, an denen die Antriebsaggregate mit dem Drehschemel oder den Mastsegmenten verbunden sind. Die Antriebsaggregate sind relativ verschwenkbar zum Drehschemel bzw. zu den Mastsegmenten angeordnet. Zur Messung der Drehbewegung an einem Anlenkpunkt kann ein Element der Drehwinkelsensoranordnung, beispielsweise der Drehwinkelsensor, drehfest mit dem Antriebsaggregat und das andere Element der Drehwinkelsensoranordnung, also das Positionsgeberelement, beispielsweise der wenigstens eine Magnet, drehfest mit dem Drehschemel oder einem der Mastsegmente verbunden sein. Vorteilhafterweise werden als Antriebsaggregate Hydraulikzylinder verwendet.

In einer weiter bevorzugten Variante der Arbeitsmaschine ist eine an der Arbeitsmaschine angeordnete Dickstoffpumpe, insbesondere Betonpumpe, vorgesehen.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigen:
- Figur 1:: erfindungsgemäßes Haltesystem,
- Figur 2:: Explosionsdarstellung von erfindungsgemäßem Haltesystem mit Gelenkbolzen,
- Figur 3a:: erfindungsgemäßer Mitnehmerstift,
- Figur 3b:: erfindungsgemäßer Mitnehmerhebel,
- Figur 4a:: erfindungsgemäßes Halteelementteil,
- Figur 4b:: erfindungsgemäßes Halteelementteil,
- Figur 4c:: erfindungsgemäßes Halteelementteil,
- Figur 5a:: erfindungsgemäßes Halteelement,
- Figur 5b:: erfindungsgemäßes Halteelement,
- Figur 5c:: erfindungsgemäßes Halteelement,
- Figur 6a:: erfindungsgemäßes Haltesystem in Schnittdarstellung,
- Figur 6b:: erfindungsgemäßes Haltesystem in detaillierter Schnittdarstellung,
- Figur 7:: erfindungsgemäße Arbeitsmaschine,
- Figur 8:: erfindungsgemäßes Haltesystem an Drehschemel und Mastsegment der Arbeitsmaschine,
- Figur 9:: erfindungsgemäßes Haltesystem an Mastsegmenten der Arbeitsmaschine,
- Figur 10:: erfindungsgemäßes Haltesystem an Fahrgestell und Stützausleger der Arbeitsmaschine,
- Figur 11a:: erfindungsgemäßes Haltesystem an Fahrgestell und Stützausleger der Arbeitsmaschine in Detailansicht,
- Figur 11b:: erfindungsgemäßes Haltesystem an Fahrgestell und Stützausleger der Arbeitsmaschine in Detailansicht,
- Figur 12a, b, c:: Haltesystem in einer alternativen Ausgestaltung,
- Figur 13:: erfindungsgemäßes Haltesystem in einer alternativen Ausgestaltung,
- Figur 14:: erfindungsgemäßes Haltesystem in einer in Explosionsdarstellung,
- Figur 15:: erfindungsgemäßes Haltesystem in einer Detailansicht.

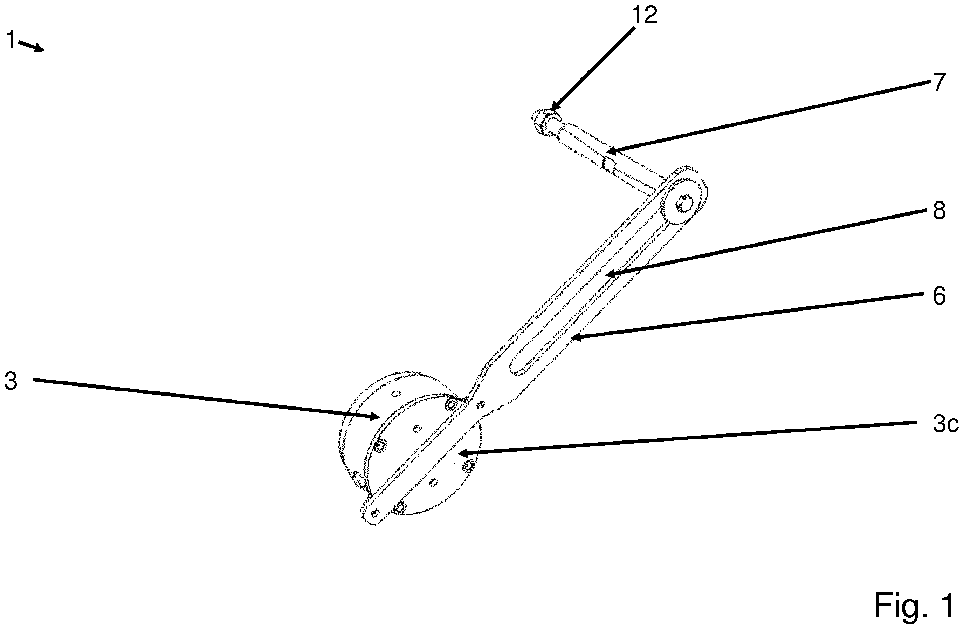

In den Figuren mit dem Bezugszeichen 1 bezeichnet ist ein erfindungsgemäßes Haltesystem 1 rein schematisch dargestellt. Die Darstellung gemäß Figur 1 zeigt, dass das Haltesystem 1 am gezeigten Halteelement 3 ein als Deckel ausgebildetes Halteelementteil 3c aufweist, wobei an diesem Halteelementteil 3c ein Mitnehmerhebel 6 angeordnet und mit dem Halteelement 3 drehfest verbunden ist. Hierdurch können die über den im Langloch 8 des Mitnehmerhebels 6 geführten Mitnehmerstift 7 eingeleiteten Drehbewegungen auf das Halteelement 3 übertragen werden. Der Mitnehmerstift 7 lässt sich mit einem der zwei eine Drehbewegung ausübenden Maschinenteile 102, 103a, 103b, 103c, 105, 106a, 106b, 109, 110, 111 koppeln, indem der Mitnehmerstift 7 mit dem gezeigten Befestigungselement 12 an dem Maschinenteil 102, 103a, 103b, 103c, 105, 106a, 106b, 109, 110, 111, 113 befestigt wird. Sich durch die Drehbewegung der Maschinenteile 102, 103a, 103b, 103c, 105, 106a, 106b, 109, 110, 111, 113 zueinander ändernde Abstände zwischen Haltelement 3 und Befestigungselement 12 können durch die Führung des Mitnehmerstifts 7 in dem Langloch 8 des Mitnehmerhebels 6 ausgeglichen werden.

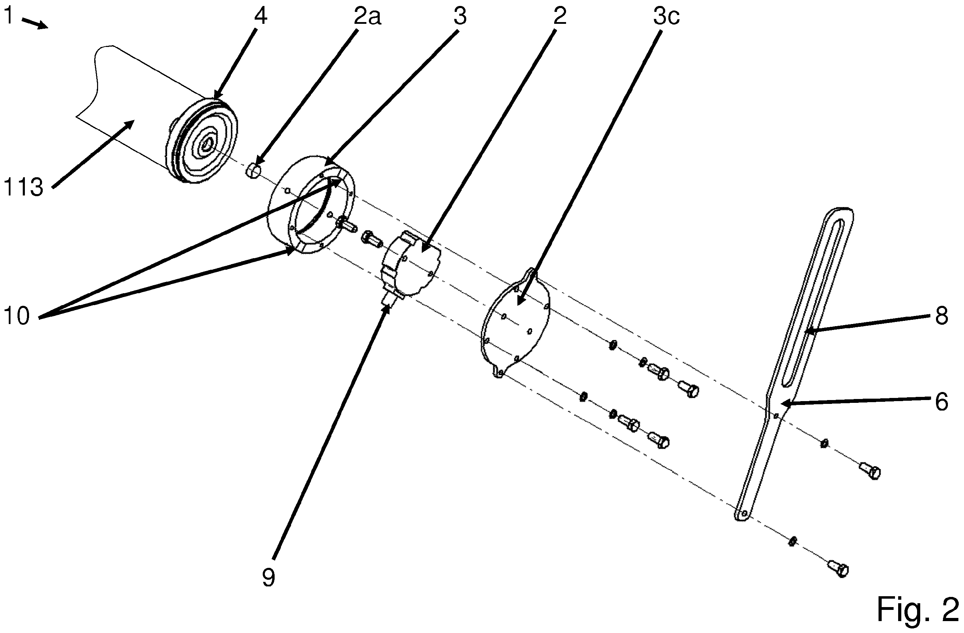

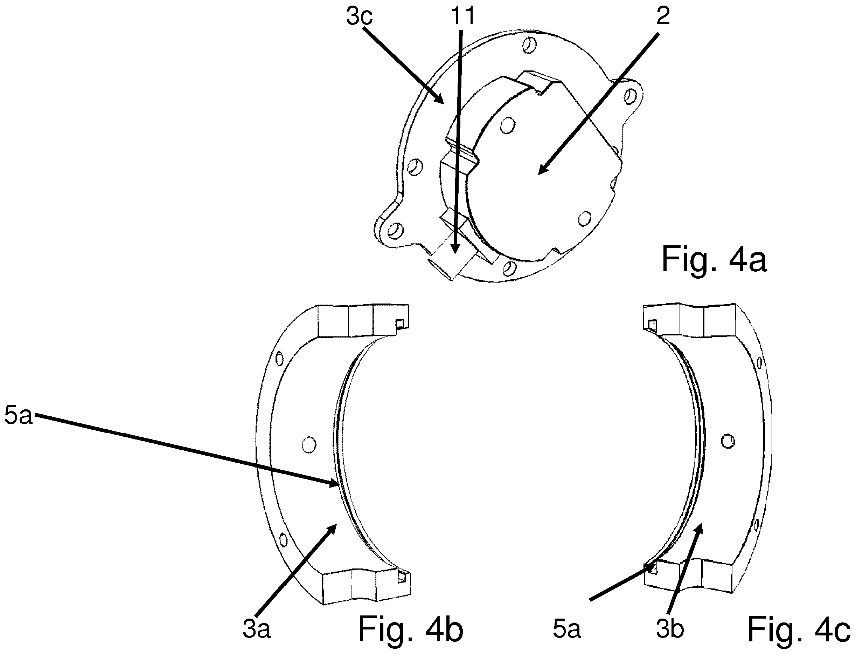

Figur 2 zeigt ein erfindungsgemäßes Haltesystem 1 in einer Explosionsdarstellung. Das Haltesystem 1 umfasst ein erstes Halteelement 3 zur Kopplung an einem ersten Maschinenteil 102, 103a, 103b, 103c, 105, 109, 110, 111, wobei das Halteelement 3 einen Drehwinkelsensor 2 einer Drehwinkelsensoranordnung aufweist. Das Halteelement 3 ist aus zwei Halteelementteilen 3a, 3b (siehe Fig. 4a u. 4b) gebildet, die an dem anderen Halteelement 4 des Haltesystems 1 anordbar sind und das letztere Halteelement formschlüssig umschließen. Dieses zweite Halteelement 4 ist zur Kopplung mit einem zweiten Maschinenteil 102, 103a, 103b, 103c, 106a, 106b, 109, 110, 111, 113 ausgebildet. Die Halteelemente 3, 4 können beispielsweise aus Aluminium oder Kunststoff gebildet sein. Im hier gezeigten Fall ist das zweite Maschinenteil 113 durch einen Gelenkbolzen 113 angedeutet. Das zweite Halteelement 4 weist ein mit dem Drehwinkelsensor 2 korrespondierendes Positionsgeberelement 2a der Drehwinkelsensoranordnung auf, das vorzugsweise in dem zweiten Halteelement 4 fest verklebt wird. Bei dem Positionsgeberelement 2a kann es sich um einen Magneten handeln. In diesem Fall ist der Drehwinkelsensor 2 vorzugsweise als Hall-Sensor ausgebildet, sodass er eine Verdrehung des Positionsgeberelementes 2a gegenüber dem ersten Halteelement 3 erfasst. Der Drehwinkelsensor 2 kann aber auch anders ausgebildet sein. Vorzugsweise ist der Drehwinkelsensor 2 berührungslos erfassend, so dass die Drehwinkelsensoranordnung 2, 2a keinem nennenswerten Verschleiß unterliegt. Der Drehwinkelsensor 2 ist an einem als Deckel ausgebildeten Halteelementteil 3c fest verschraubt, welches wiederum mit dem kreisförmigen Halteelement 3 verschraubt wird. Um die Signale des Drehwinkelsensors 2 zu erfassen, weist der Drehwinkelsensor 2 am Ausgang ein Signalkabel 9 auf, welches durch Kabeldurchführungen 10 aus dem Halteelement 3 geführt ist. An dem Deckel 3c des Halteelements 3 ist der bereits in Figur 1 beschriebene Mitnehmerhebel 6 verschraubt.

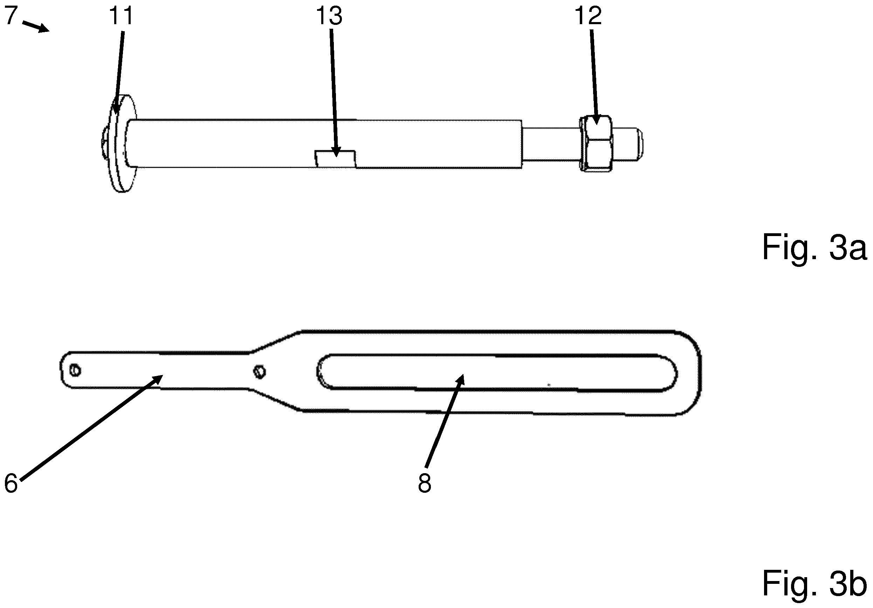

Die Figur 3a zeigt den Mitnehmerstift 7 aus Figur 1 noch einmal detaillierter dargestellt. Neben dem Befestigungselement 12 zur Kopplung mit einem Maschinenteil 102, 103a, 103b, 103c, 105, 106a, 106b, 109, 110, 111 weist der Mitnehmerstift 7 eine Halteplatte 11 auf, welche die sichere Führung des Mitnehmerstifts 7 in dem Langloch 8 des Mitnehmerhebels 6 sicherstellt. Mittig an dem Mitnehmerstift 7 ist außerdem eine Einkerbung 13 gezeigt, welche die Handhabung des Mitnehmerstifts 7, insbesondere das Einschrauben des Mitnehmerstifts 7 in ein Maschinenteil 102, 103a, 103b, 103c, 105, 106a, 106b, 109, 110, 111 ermöglicht und erleichtert. Der Mitnehmerschaft 7 kann auch zweiteilig aus einer Gewindestange und einer Hülse mit einem Innengewinde bestehen, wobei die Gewindestange in das Maschinenteil 102, 103a, 103c, 105, 106a, 106b, 109, 110, 111 eingeschraubt und die Hülse, die den Mitnehmerhebel 6 führt, mit dem Innengewinde auf die Gewindestange aufgeschraubt wird. Hierdurch ist die Länge des Mitnehmerstiftes 6 variabel und der gleiche Mitnehmerstift 7 kann an verschiedene Einbaupositionen angepasst werden. In Figur 3b ist der Mitnehmerhebel 6 mit darin angeordnetem Langloch 8 zur Führung des Mitnehmerstifts 7 detaillierter dargestellt.

Der Mitnehmerhebel 6 kann auch mit einem einfachen Loch statt eines Langloches 8 ausgestattet sein. Dies ist insbesondere dann möglich, wenn das Sensorhalteelement 4 zentral am Ende eines Gelenkbolzens 113, wie, wie in Fig. 2 dargestellt, befestigt ist, so dass sich bei einer Drehbewegung des Knickgelenkes keine Abstandsänderung zum Mitnehmerstift 7 ergibt. Das Langloch 8 hat aber insbesondere auch den Vorteil, dass baugleiche Mitnehmerhebel für verschiedenen Einbaupositionen verwendet werden können.

Der Mitnehmerhebel 6 kann zusätzlich mit einer Lasche oder ähnlichem zur Führung des Kabels 9 des Sensors 2 ausgestattet sein. Aus Figur 4a ist der bereits in Figur 1 und 2 gezeigte Deckel 3c des ersten Halteelementes 3 detaillierter dargestellt. Zu sehen ist, dass der Drehwinkelsensor 2 an dem Halteelementteil 3c fest verschraubt ist.

Die Figuren 4b und 4c zeigen jeweils ein Halteelementteil 3a, 3b des ersten Halteelementes 3. Die beiden Halteelementteile 3a, 3b sind als halbkreisförmige Halbschalen ausgebildet und können am dem zweiten Halteelementteil 4 (Fig. 2) derart angeordnet werden, dass sie dieses formschlüssig umschließen. Aus den beiden Figuren 4b, 4c ersichtlich ist, dass die Halteelementteile eine Nut 5a als Führung 5 zwischen den beiden Halteelementen 3, 4 (Fig. 2) aufweisen.

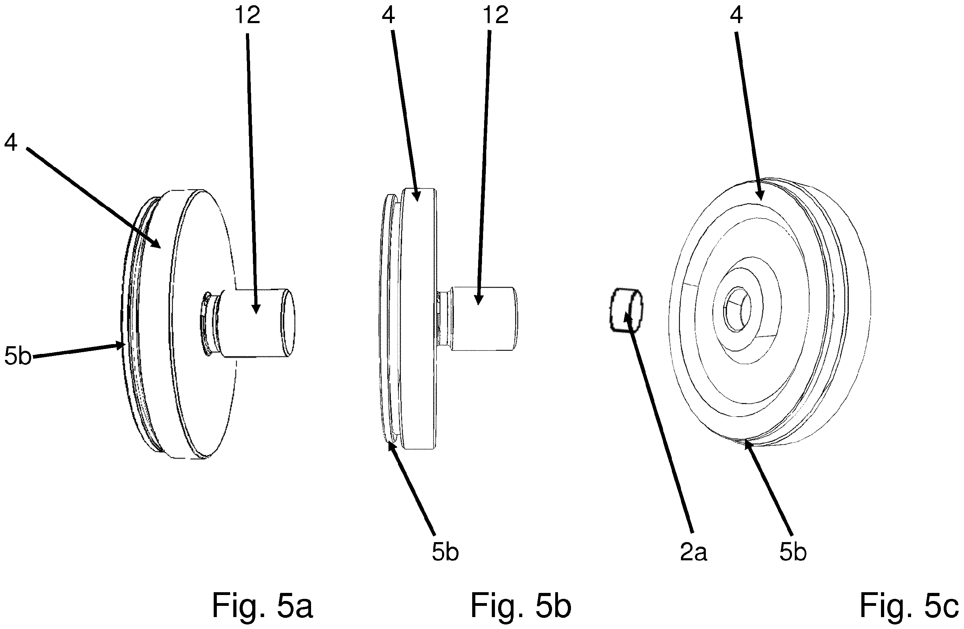

Die Figuren 5a, 5b und 5c zeigen das zweite Halteelement 4, welches ein Befestigungselement 12 in Form eines Gewindebolzens zur Kopplung mit einem Maschinenteil 102, 103a, 103b, 103c, 106a, 106b, 109, 110, 111, 113 aufweist. Das Halteelement 4 weist außerdem einen Vorsprung 5b auf, welcher in die in Figur 4b und 4c gezeigte Nut 5a der Führung 5 nach dem Nut/Feder Prinzip eingreifen kann, wenn das erste Halteelement 3 das zweite Halteelement 4 durch Anordnung der Halteelementteile 3a, 3a formschlüssig umschließt. In Figur 5c ist außerdem das mit dem Drehwinkelsensor 2 korrespondierende Positionsgeberelement 2a angedeutet, welches in der zentralen Mulde des zweiten Halteelementes 4 verklebt wird. Das zweite Haltelement 4 kann zusätzlich mit zwei seitlichen Schlüsselflächen versehen sein um es mit einem Schraubenschlüssel fest mit dem Maschinenteil 102, 103a, 103b, 103c, 106a, 106b, 109, 110, 111, 113 zu verschrauben.

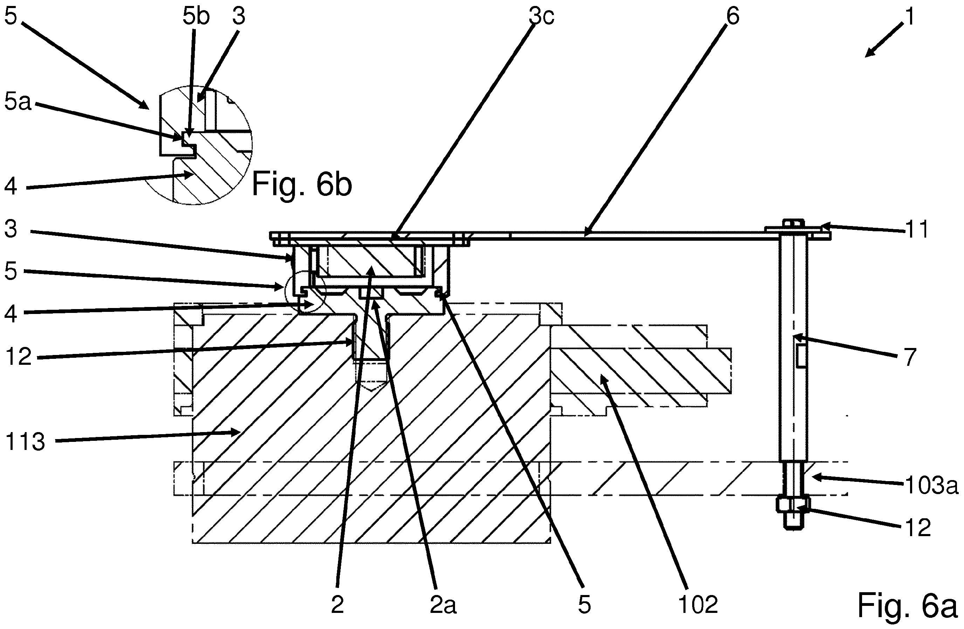

Für die Montage des Haltesystems 1 gemäß den Figuren 1 bis 11 werden zunächst die zwei Halteelementteile 3a und 3b mit ihren Nuten 5a um das zweite Halteelement 4 gelegt und dann die zwei Halteelementteile 3a und 3b mit dem Deckel 3c, der bereits mit dem Drehwinkelsensor 2 verschraubt ist, verschraubt, so dass die Elemente 3a, 3b, 3c und 4 zusammen mit dem Drehwinkelsensor 2 und dem Positionsgeberelement 2a eine vormontierte, universell verwendbare Einheit ergeben. Aus Figur 6a ist eine Schnittansicht durch ein gekoppeltes Haltesystem 1 ersichtlich. Das Haltesystem 1 ist mit dem ersten Halteelement 3 über den Mitnehmerhebel 6 und den daran geführten Mitnehmerstift 7 an einem ersten Maschinenteil 103a gekoppelt. Dieses erste Maschinenteil 103a ist um ein Knickgelenk 104a gegenüber einem zweiten Maschinenteil 102 drehbar gelagert. Mit diesem zweiten Maschinenteil 102 ist ein Gelenkbolzen 113 drehfest verbunden mit dem das zweite Halteelement 4 des Haltesystems 1 gekoppelt ist. Zwischen dem ersten Halteelement 3 und dem zweiten Halteelement 4 ist eine Führung 5 angeordnet, die eine Drehung der beiden Halteelemente 3, 4 zueinander ermöglicht. Diese Führung 5 ist im Ausschnitt gemäß Figur 6b noch einmal detaillierter dargestellt. Zu sehen ist, dass das erste Halteelement 3 als Führung eine Nut 5a aufweist, während das zweite Halteelement 4 als Führung 5 einen in die Nut 5a eingreifenden Vorsprung 5b, vorzugsweise in Form eines Kragens, aufweist. Hierdurch ist eine robuste und sichere und dennoch leichtgängige Führung zwischen den Halteelementen 3, 4 gewährleistet. Das erste Halteelement 3 weist den Drehwinkelsensor 2 der Drehwinkelsensoranordnung auf. Wie zu erkennen ist, ist der Drehwinkelsensor 2 fest an dem als Deckel ausgebildeten Halteelementteil 3c befestigt, vorzugsweise verschraubt. Das zweite Halteelement 4 weist ein mit dem Drehwinkelsensor 2 korrespondierendes Positionsgeberelement 2a der Drehwinkelsensoranordnung auf. Das Positionsgeberelement 2a ist in dem zweiten Halteelementteil 4 vorzugsweise verklebt. Der Drehwinkelsensor 2 ist so ausgebildet, dass er eine Verdrehung des Positionsgeberelements 2a gegenüber dem Drehwinkelsensor 2 erfasst. Durch die Führung zwischen dem ersten Halteelementteil 3 und dem zweiten Halteelementteil 4 ist der Drehwinkelsensor 2 im ersten Halteelementteil 3 drehbar zum Positionsgeberelement 2a am zweiten Halteelementteil 4 geführt. Wie zu erkennen ist, kann durch die derart ausgebildete Führung 5 insbesondere die axiale Ausrichtung, aber auch der Abstand, sowie die Parallelität des Drehwinkelsensors 2 und des Positionsgeberelements 2a durch das erste Halteelement 3 und das zweite Halteelement 4 sichergestellt werden.

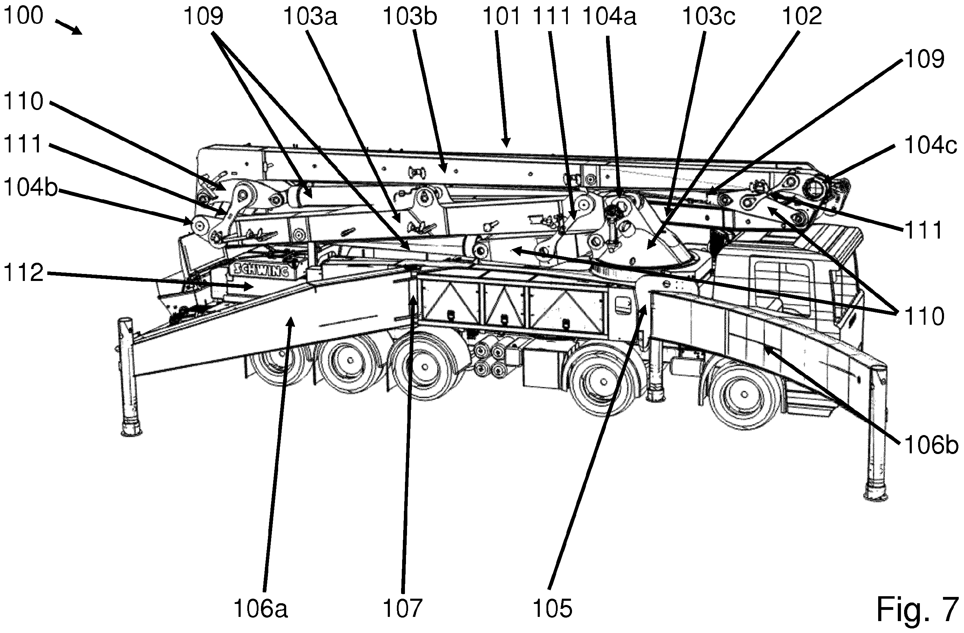

Die Figur 7 zeigt beispielhaft eine erfindungsgemäße Arbeitsmaschine 100 in Form einer Autobetonpumpe mit Verteilermast 101. Die Arbeitsmaschine 100 weist einen ausfaltbaren Knickmast 101 auf, der einen um eine Hochachse drehbaren Drehschemel 102 und eine Mehrzahl von Mastsegmenten 103a, 103b, 103c umfasst. Die Mastsegmente 103a, 103b, 103c sind über Knickgelenke 104a, 104b, 104c mit dem jeweils benachbarten Mastsegment 103a, 103b, 103c oder dem Drehschemel 102 schwenkbeweglich verbunden. Um eine Schwenkbewegung zwischen den Mastsegmenten 103a, 103b, 103c oder dem Drehschemel 102 einzuleiten weist der Knickmast 101 Antriebsaggregate in Form von Hydraulikzylindern 109 auf. Die Hydraulikzylinder 109 sind über Anlenkpunkte 108 an den Mastsegmenten 103a, 103b, 103c bzw. dem Drehschemel 102 angelenkt und mit Koppelgliedern 110, 111 in Form von Druckstangen 110 und Umlenkhebel 111 verbunden. Der Drehschemel 102 des Knickmastes 102 ist drehbeweglich mit dem Fahrgestell 105 der Arbeitsmaschine 100 verbunden. Das durch das Ausfalten und die Bewegung des Knickmastes 101 erzeugte Kippmoment wird von dem Fahrgestell 105 auf einer mittels Stützauslegern 106a, 106b vergrößerten Standfläche am Untergrund abgestützt. Hierzu weist das Fahrgestell 105 mehrere Stützausleger 106a, 106b auf, die von einer Fahrstellung aus, in der die Stützausleger 106a, 106b nicht über Außenmaße des Fahrgestells 105 hinausragen, in eine Abstützstellung ganz oder teilweise ausgeklappt werden können. Im in Figur 7 gezeigten Ausführungsbeispiel ist der Stützausleger 106a um das Knickgelenk 107 ausklappbar an dem Fahrgestell 105 angeordnet und ausgeklappt dargestellt. In dieser Stellung stützt der Stützausleger 106a die Arbeitsmaschine ab. Im hinteren Bereich der als Fahrzeug ausgebildeten Arbeitsmaschine 100 ist eine als Betonpumpe dienende Dickstoffpumpe 112 angeordnet. Über diese Dickstoffpumpe 112 lässt sich Beton entlang des ausgeklappten Knickmastes 101 durch nicht gezeigte Fördererleitungen fördern und mittels Mastbewegungen des Knickmastes 101 am Mastende verteilen.

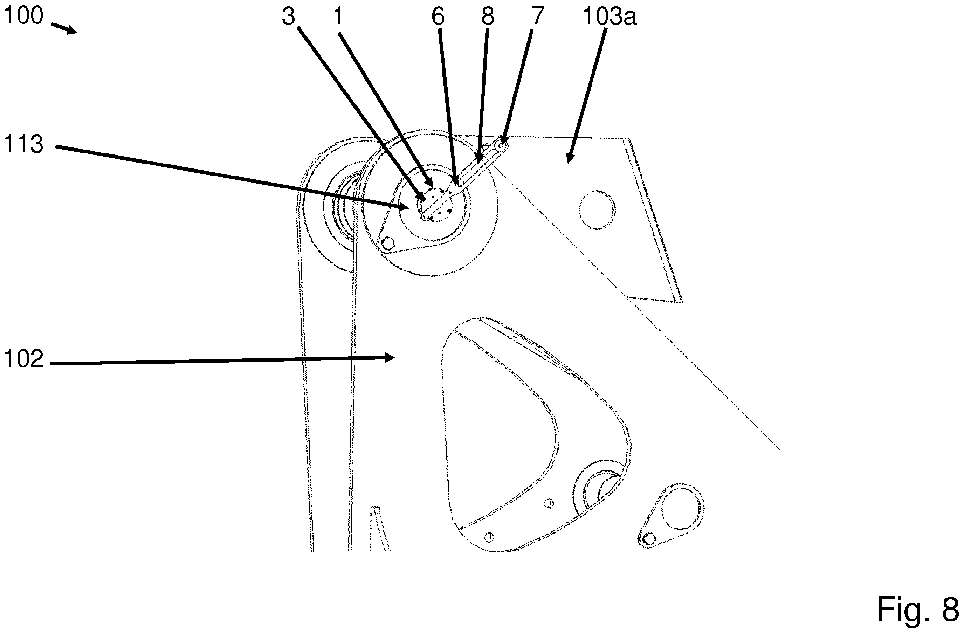

Figur 8 ist eine Detailansicht und zeigt ein Haltesystem 1, welches im Bereich des Knickgelenks 104a zwischen Drehschemel 102 und erstem Mastsegment 103a des Knickmastes 101 gemäß Figur 7 angeordnet ist. Der Mitnehmerstift 7 ist mit dem ersten Mastsegment 103a fest verbunden, sodass der Mitnehmerhebel 6 und das erste Halteelement 3 an dem Mastsegment 103a angekoppelt sind. Das hier gezeigte Gelenk 104a ist bereits anhand der Schnittzeichnung in Figur 6a und 6b näher beschrieben worden. Das erste Mastsegment 103a bildet beispielhalft das erste Maschinenteil 103a, welches mit dem ersten Halteelement 3 gekoppelt ist. Während der Drehschemel 102 beispielhaft das zweite Maschinenteil 102 bildet, mit dem das zweite Halteelement 4 gekoppelt ist. Wie bereits zu Figur 6a angemerkt, ist der Gelenkbolzen 113 drehfest mit dem Drehschemel 102 verbunden. Hierdurch führt eine Verschwenkung des erste Mastsegments 103a gegenüber dem Drehschemel 102 zu einer Drehbewegung des ersten Halteelementes 3 gegenüber dem zweiten, mit dem Gelenkbolzen 113, gekoppelten Halteelementes 4. Diese Drehbewegung wird von der Drehwinkelsensoranordnung 2, 2a dadurch erfasst, dass der Drehwinkelsensor 2 eine Verdrehung des Positionsgeberelements 2a am zweiten Halteelement 4 erfasst. Das Haltesystem 1 ist in dem hier gezeigten Anwendungsfall derart gekoppelt, dass die Drehwinkelsensoranordnung 2, 2a den Knickwinkel zwischen dem Drehschemel 102 und dem ersten Mastsegment 103a unmittelbar erfasst.

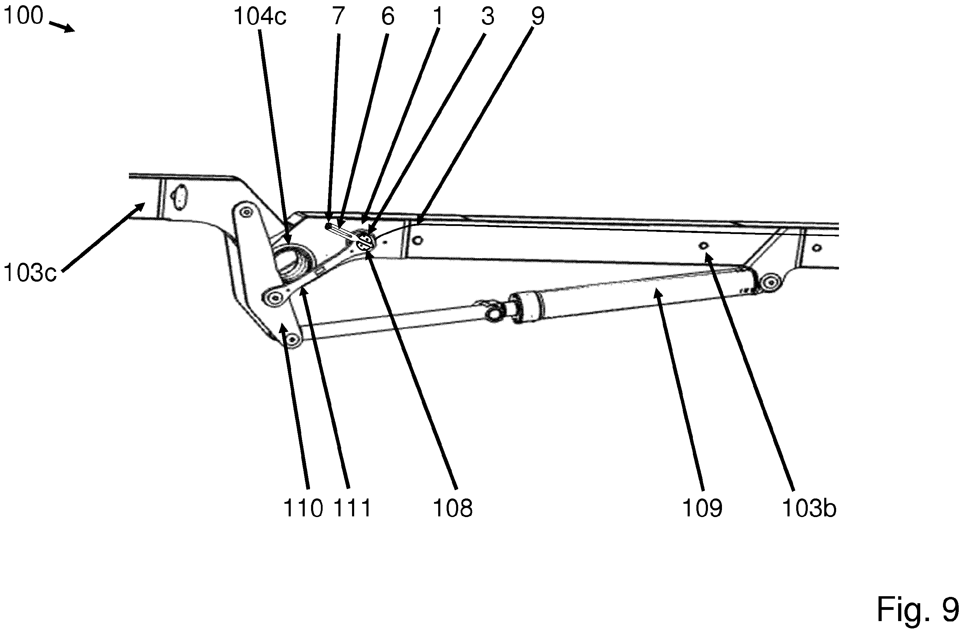

Die Figur 9 zeigt beispielhaft eine andere Einsatzmöglichkeit des Haltesystems 1 an einem Knickmast 101. Hier ist genauer das Knickgelenk 104c zwischen dem zweiten Mastsegment 103b und dem dritten Mastsegment 103c gezeigt. Das Haltesystem 1 ist an einem Anlenkpunkt 108 des Umlenkhebels 111 am zweiten Mastsegment 103b angeordnet. Das Haltesystem 1 ist derart angekoppelt, dass die Drehwinkelsensoranordnung 2, 2a den Knickwinkel zwischen dem Umlenkhebel 111 und dem Mastsegment 103b erfasst. Aus diesem erfassten Knickwinkel wird der absolute Knickwinkel zwischen den beiden Mastsegmenten 103b, 103c im Knickgelenk 104c umgerechnet, um die Stellung der beiden Mastsegmente 103b, 103c zueinander zu ermitteln. Die Anordnung des Haltesystems 1 am Anlenkpunkt 108 des Umlenkhebels 111 ermöglicht die Durchführung einer nicht gezeigten Betonförderleitung durch das Knickgelenk 104c zwischen den beiden Mastsegmenten103b, 103c. Über den Mitnehmerstift 7 und den Mitnehmerhebel 6 ist das erste Halteelement 3 mit dem Drehwinkelsensor 2 an dem zweiten Mastsegment 103b des Knickmastes 101 angekoppelt, während das zweite Halteelement 4 mit dem Positionsgeberelement 2a mit dem Umlenkhebel 111 gekoppelt ist. Hierdurch lässt sich durch die Drehwinkelsensoranordnung 2, 2a die Stellung der beiden Mastsegmente 103b, 103c einfach und sicher ermitteln. Die Anordnung am Anlenkpunkt 108 hat zudem den Vorteil, dass das Kabel 9 zur Signalübertragung vom Drehwinkelsensor 2 einfach am Mastsegment 103b entlang geführt werden kann.

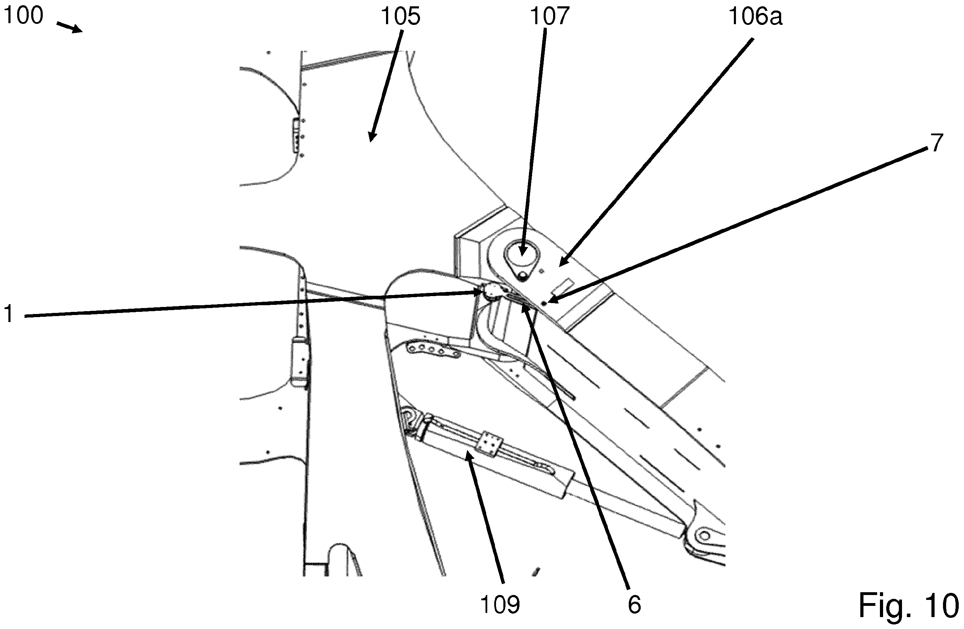

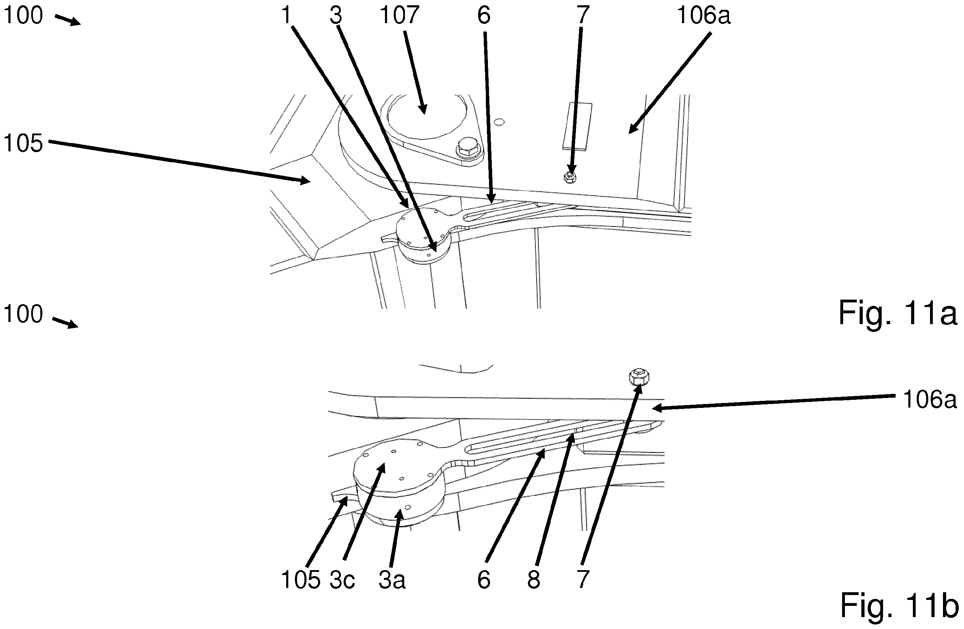

Die Figur 10 zeigt beispielhaft eine weitere Einsatzmöglichkeit des Haltesystems 1 an einer Arbeitsmaschine 100 gemäß Figur 7. Im hier gezeigten Einsatzbereich ist das Haltesystem 1 mit dem Mitnehmerstift 7 über den Mitnehmerhebel 6 am Stützausleger 106a angekoppelt, sodass sich das erste Halteelement 3 mit dem Drehwinkelsensor 2 abhängig von der Schwenkbewegung des Stützauslegers 106a um die durch das Knickgelenk 107 gebildete Knickachse bewegt. Das zweite Halteelement 4 des Haltesystems 1 ist in diesem Fall mit dem Fahrgestell 105 gekoppelt, sodass das Positionsgeberelement 2a gegenüber dem Fahrgestell 105 drehfest verbunden ist. Hierzu ist das Halteelement 4 an einer angeschweißten Halteplatte am Fahrgestell 105 gehalten. Wird der Stützausleger 106a um das Knickgelenk 107 durch den Hydraulikzylinder 109 gegenüber dem Fahrgestell 105 verschwenkt erfasst der Drehwinkelsensor 2 eine Verdrehung des Positionsgeberelements 2a gegenüber dem Drehwinkelsensor 2 und kann so Aufschluss über die Stellung des Stützauslegers 106a gegenüber dem Fahrgestell 105 geben. Die Verschwenkbewegung des Stützauslegers 106a gegenüber dem Fahrgestell 105 führt zu einer Abstandsänderung des Mitnehmerstifts 7 gegenüber dem Halteelement 3, welche jedoch durch das Langloch 8 in dem Mitnehmerhebel 6 ausgeglichen wird. Dies ist auch aus den Detailansichten gemäß Figur 11a und 11b genauer ersichtlich. Hier ist auch zu erkennen, dass der Mitnehmerhebel 7 und der Deckel 3c des Halteelementes 3 aus einem Teil gefertigt sind.

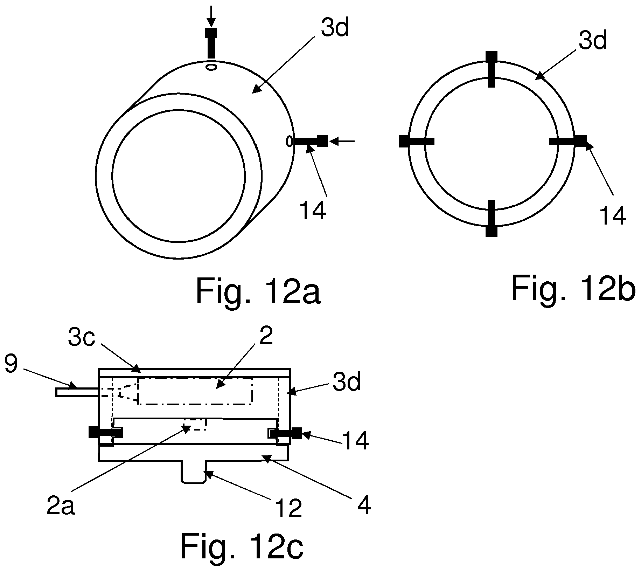

Eine alternative Konstruktion des Haltesystems 1, das auf einfacher gestalteteren Bauteilen basiert, ist in den Fig. 12a, 12b und 12c dargestellt. Hier wird statt der zwei Halbschalen 3a, 3b als erstes Halteelement ein einfach gestalteter Zylinder 3d ohne die Nut 5a verwendet. Zwei bis vier Schrauben 14 bilden Haltestifte, die hinter den Vorsprung 5b des zweiten Haltelementes 4 greifen, werden, beispielsweise durch die Schraubenköpfe begrenzt, in den Zylinder 3d eingeschraubt, so dass der Zylinder 3d und das zweite Halteelement 4 drehbar zueinander bleiben. Der Deckel 3c kann mit dem Zylinder 3d verschraubt sein oder der Zylinder 3d und der Deckel 3c bilden zusammen ein einstückiges erstes Haltelement 3.

Eine weitere Vereinfachung könnte auch durch ein einfaches Verklipsen des ersten Halteelementes 3 mit dem zweiten Halteelement 4 durch eine entsprechend gestalteten Nut/Federanordnung 5a/5b ermöglicht werden, die gegebenenfalls eine nicht zerstörungsfrei zu lösende Verbindung zwischen den Bauteilen herstellt.

In den Ausführungsbeispielen sind der Drehwinkelsensor 2 mit dem ersten Halteelement 3 und das Positionsgeberelement 2a mit dem zweiten Halteelement 4 verbunden. Die Einbaupositionen des Drehwinkelsensors 2 und des Positionsgeberelementes 2a können natürlich auch gegeneinander vertauscht sein. Eine andere berührungslos arbeitende Drehwinkelsensorik, die beispielsweise statt einer axialen Messung eine radiale Messung durchführt oder auch ein einfaches im Haltesystem 1 montiertes Potentiometer zur Drehwinkelmessung, dass durch einen geeigneten Mitnehmer im Inneren des Haltesystems 1 geführt wird, also eine nicht berührungslos arbeitende Sensorik, sind als alternative Ausgestaltung in Verbindung mit dem hier vorgestellten Haltesystem denkbar.

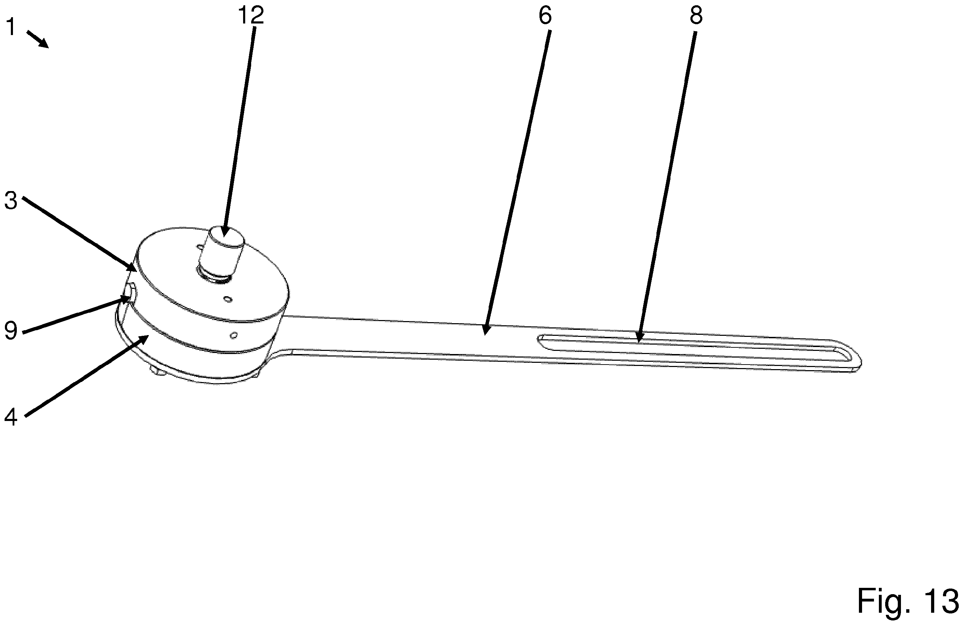

Die Figur 13 offenbart eine alternative Ausgestaltung des Haltesystems 1. Die Darstellung gemäß Figur 13 zeigt, dass am abgebildeten Halteelement 4 ein Mitnehmerhebel 6 angeordnet und mit dem Halteelement 4 drehfest verbunden ist. Hierdurch können die über den im Langloch 8 des Mitnehmerhebels 6 geführten Mitnehmerstift 7 eingeleiteten Drehbewegungen auf das Halteelement 4 übertragen werden. Der Mitnehmerstift 7 (Fig. 1) lässt sich mit einem der zwei eine Drehbewegung ausübenden Maschinenteile 102, 103a, 103b, 103c, 105, 106a, 106b, 109, 110, 111 koppeln, indem der Mitnehmerstift 7 (Fig. 1) mit dem Befestigungselement 12 (Fig. 1) an dem Maschinenteil 102, 103a, 103b, 103c, 105, 106a, 106b, 109, 110, 111, 113 befestigt wird. Sich durch die Drehbewegung der Maschinenteile 102, 103a, 103b, 103c, 105, 106a, 106b, 109, 110, 111, 113 zueinander ändernde Abstände zwischen Haltelement 4 und Befestigungselement 12 (Fig. 1) können durch die Führung des Mitnehmerstifts 7 (Fig. 1) in dem Langloch 8 des Mitnehmerhebels 6 ausgeglichen werden. Das weitere Halteelement 3 weist ein Befestigungselement 12 in Form eines Gewindebolzens zur Kopplung mit einem Maschinenteil 102, 103a, 103b, 103c, 106a, 106b, 109, 110, 111, 113 auf.

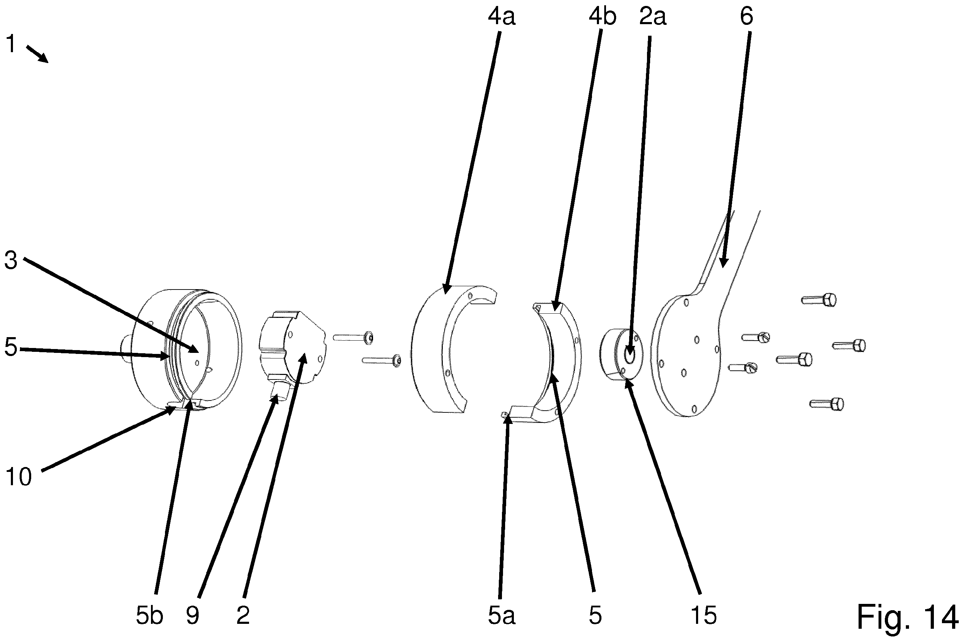

Die Figur 14 zeigt eine Explosionsdarstellung des Haltesystems 1 gemäß Figur 13. Das Haltesystem 1 umfasst ein erstes Halteelement 4 zur Kopplung an einem ersten Maschinenteil 102, 103a, 103b, 103c, 105, 109, 110, 111, wobei das Halteelement 4 ein mit dem Drehwinkelsensor 2 korrespondierendes Positionsgeberelement 2a der Drehwinkelsensoranordnung aufweist, das vorzugsweise in dem Halteelement 4 über einen Aufnahmering 15 mit dem Halteelement 4 verschraubt ist. Im gezeigten Ausführungsbeispiel ist der Aufnahmering 15 mit dem Mitnehmerhebel 6 verschraubt, der einen Deckel im Bereich des Halteelements 4 ausbildet. Das Halteelement 4 ist aus zwei Halteelementteilen 4a, 4b gebildet, die an dem anderen Halteelement 3 des Haltesystems 1 anordbar sind und das letztere Halteelement 3 formschlüssig umschließen. Das zweite Halteelement 3 ist zur Kopplung mit einem zweiten Maschinenteil 102, 103a, 103b, 103c, 106a, 106b, 109, 110, 111, 113 ausgebildet. Hierzu weist das Halteelement 3 einen in Figur 13 gut zu erkennenden Gewindebolzen 12 auf. Der Deckel des Mitnehmerhebels 6 ist mit den beiden Halteelementteilen 4, 4a des Halteelements 4 verschraubt. Das Positionsgeberelement 2a kann auch an einem als Deckel ausgebildeten Halteelementteil fest verschraubt sein, welches wiederum mit dem kreisförmigen Halteelement 4 verschraubt wird. Bei dem Positionsgeberelement 2a kann es sich um einen Magneten handeln. Die Halteelemente 3, 4 können beispielsweise aus Aluminium oder Kunststoff gebildet sein. Das zweite Halteelement 3 weist den Drehwinkelsensor 2 der Drehwinkelsensoranordnung auf. Der Drehwinkelsensor 2 ist vorzugsweise als Hall-Sensor ausgebildet, sodass er eine Verdrehung des magnetischen Positionsgeberelementes 2a gegenüber dem ersten Halteelement 4 erfasst. Vorzugsweise ist der Drehwinkelsensor 2 berührungslos erfassend, so dass die Drehwinkelsensoranordnung 2, 2a keinem nennenswerten Verschleiß unterliegt. Um die Signale des Drehwinkelsensors 2 zu erfassen, weist der Drehwinkelsensor 2 am Ausgang ein Signalkabel 9 auf, welches durch Kabeldurchführungen 10 aus dem Halteelement 3 geführt ist. Weiter zu erkennen ist, dass das Halteelement 3 einen Vorsprung 5b aufweist, welcher in die Nut 5a der Führung 5 am weiteren Halteelement 4 nach dem Nut/Feder Prinzip eingreifen kann, wenn das eine Halteelement 4 das andere Halteelement 3 durch Anordnung von zwei Halteelementteilen 4a, 4a formschlüssig umschließt. In Figur 14 ist außerdem das mit dem Drehwinkelsensor 2 korrespondierende Positionsgeberelement 2a gezeigt, welches in einem Aufnahmering 15 an dem weiteren Halteelementes 4 befestigt wird.

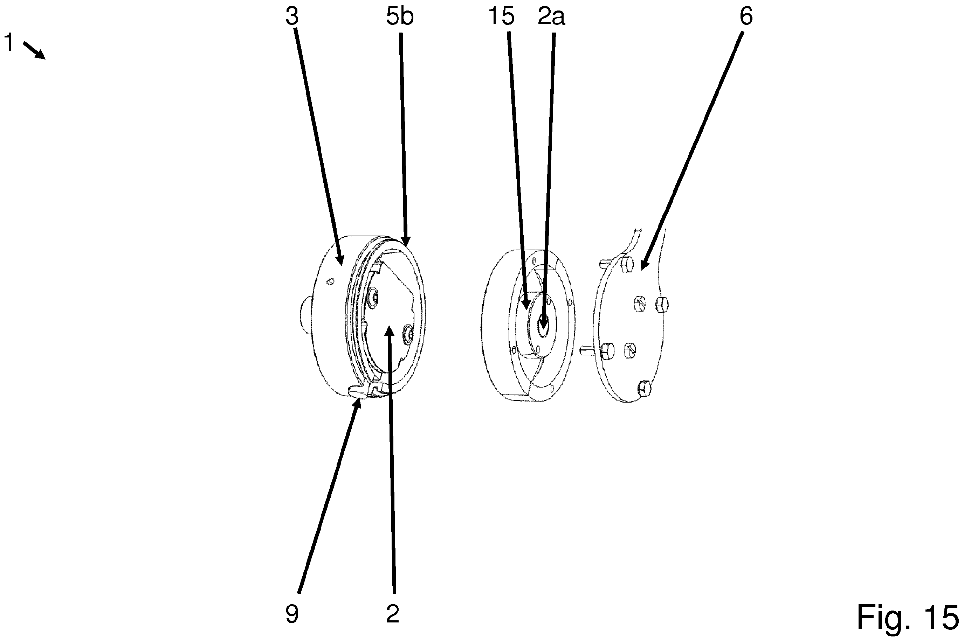

Die Figur 15 zeigt den Positionsgeber 2a der Drehwinkelsensoranordnung mit Aufnahmering 15 in dem ersten Halteelemente 4 angeordnet. Der Drehwinkelsensor 2 der Drehwinkelsensoranordnung ist in dem zweiten Halteelement 3 angeordnet, sodass das Signalkabel 9 durch die Kabeldurchführungen 10 geführt ist. Die in den Figuren 13 bis 15 gezeigte Ausführungsform des Haltesystems 1 ist besonders geeignet zur Anordnung des Halteelements 3 an einem gegenüber der weiteren Kabelführung des Signalkabel 9 feststehenden Maschinenteil 102, 103a, 103b, 103c, 106a, 106b, 109, 110, 111, 113. Die Gefahr, dass das Signalkabel 9 versehentlich abgerissen wird, ist durch diese Ausgestaltung wesentlich verringert.

Natürlich ist die Erfindung nicht auf die dargestellten Ausführungsbeispiele und Alternativen beschränkt. Weitere Ausgestaltungen sind möglich, ohne den Grundgedanken zu verlassen.

### Bezuaszeichenliste

1 Haltesystem
2 Drehwinkelsensor (Drehwinkelsensoranordnung)
2a Positionsgeberelement (Drehwinkelsensoranordnung)
3 erstes Halteelement
3a erstes Halteelementteil
3b zweites Halteelementteil
3c Deckel
3d erstes Halteelementeil (alternativ zylinderförmig)
4 zweites Halteelement
5 Führung
5a Nut
5b Vorsprung
6 Mitnehmerhebel
7 Mitnehmerstift
8 Langloch
9 Kabel
10 Kabeldurchführungen
11 Halteplatte
12 Befestigungsmittel
13 Einkerbung
14 Schrauben
15 Aufnahmering
100 Arbeitsmaschine
101 Knickmast
102 Drehschemel
103a, 103b, 103c Mastsegmente
104a, 104b, 104c Knickgelenke
105 Fahrgestell
106a, 106b Stützausleger
107 Knickgelenke
108 Anlenkpunkt
109 Hydraulikzylinder
110 Druckstange
111 Umlenkhebel
112 Dickstoffpumpe
113 Gelenkbolzen

## Patentansprüche

1. Haltesystem (1) für eine Drehwinkelsensoranordnung (2, 2a), zur Halterung an einer Arbeitsmaschine (100), wobei die Drehwinkelsensoranordnung (2, 2a) zur Erfassung eines Knickwinkels an einem Knickgelenk (104a, 104b, 104c, 107, 108) zwischen zwei Maschinenteilen (102, 103a, 103b, 103c, 105, 106a, 106b, 109, 110, 111, 113) ausgebildet ist, mit
- einem ersten Halteelement (3) zur Kopplung an einem ersten Maschinenteil (102, 103a, 103b, 103c, 105, 106a, 106b, 109, 110, 111, 113), wobei das Haltelement (3) einen Drehwinkelsensor (2) der Drehwinkelsensoranordnung (2, 2a) aufweist,
- einem zweiten Halteelement (4) zur Kopplung an einem zweiten Maschinenteil (102, 103a, 103b, 103c, 105, 106a, 106b, 109, 110, 111, 113), wobei das zweite Halteelement (4) mindestens ein mit dem Drehwinkelsensor (2) korrespondierendes Positionsgeberelement (2a) der Drehwinkelsensoranordnung (2, 2a) aufweist, wobei der Drehwinkelsensor (2) dazu ausgebildet ist, eine Verdrehung des Positionsgeberelements (2a) gegenüber dem Drehwinkelsensor (2) zu erfassen, wobei das erste Halteelement (3) den Drehwinkelsensor (2) mittels einer zwischen dem erstem Halteelement (3) und dem zweiten Halteelement (4) gebildeten Führung (5) drehbar zum Positionsgeberelement (2a) am zweiten Halteelement (4) führt,
**dadurch gekennzeichnet,**
**dass** eines der beiden Halteelemente (3, 4) als Führung (5) eine Nut (5a) aufweist, während das andere Halteelement (3, 4) als Führung (5) mindestens einen in die Nut (5a) eingreifenden Vorsprung (5b) aufweist, wobei eines der beiden Halteelemente (3, 4) mindestens zwei Halteelementteile (3a, 3b, 4a, 4b) umfasst, die an dem anderen Halteelement (3, 4) anordbar sind und das letztere Halteelement (3, 4) formschlüssig umschließen.

2. Haltesystem (1) nach Anspruch 1, **dadurch gekennzeichnet, dass** die Halteelementteile (3a, 3b, 4a, 4b) als Halbschalen ausgebildet sind.

3. Haltesystem (1) nach Anspruch 1 oder 2, **dadurch gekennzeichnet, dass** eines der beiden Halteelemente (3, 4) mit einem Mitnehmerhebel (6) verbunden ist.

4. Haltesystem (1) nach Anspruch 3, **dadurch gekennzeichnet, dass** der Mitnehmerhebel (6) ein Langloch (8) aufweist.

5. Haltesystem (1) nach Anspruch 4, **dadurch gekennzeichnet, dass** ein Mitnehmerstift (8) in dem Langloch (8) am Mitnehmerhebel (6) geführt ist, wobei der Mitnehmerstift (7) mit einem der zwei Maschinenteile (102, 103a, 103b, 103c, 105, 106a, 106b, 109, 110, 111) koppelbar ist.

6. Haltesystem (1) nach einem der Ansprüche 1 bis 5, **dadurch gekennzeichnet, dass** der Drehwinkelsensor (2) berührungslos erfassend ausgebildet ist.

7. Haltesystem (1) nach Anspruch 6, **dadurch gekennzeichnet, dass** der Drehwinkelsensor (2) als Hall-Sensor und das mindestens eine korrespondierende Positionsgeberelement (2a) als Magnet ausgebildet ist.

8. Arbeitsmaschine (100) mit mindestens einem Haltesystem (1) nach einem der vorhergebenden Ansprüche.

9. Arbeitsmaschine (100) nach Anspruch 8, **gekennzeichnet durch**, einen ausfaltbaren Knickmast (101), der einen um eine Hochachse drehbaren Drehschemel (102) und eine Mehrzahl von Mastsegmenten (103a, 103b, 103c) umfasst, wobei die Mastsegmente (103a, 103b, 103c) über Knickgelenke (104a, 104b, 104c) mit dem jeweils benachbarten Mastsegment (103a, 103b, 103c) oder Drehschemel (102) schwenkbeweglich verbunden sind, wobei das mindestens eine Haltesystem (1) eine Drehwinkelsensoranordnung (2, 2a) zur Erfassung eines Knickwinkels zwischen zwei benachbarten Mastsegmenten (103a, 103b, 103c) oder zwischen einem Mastsegment (103a) und dem benachbarten Drehschemel (102) umfasst.

10. Arbeitsmaschine (100) nach Anspruch 8 oder 9, **gekennzeichnet durch** ein Fahrgestell (105), mehrere Stützausleger (106a, 106b), die jeweils am Fahrgestell (105) angeordnet und von einer Fahrstellung ganz oder teilweise in eine Abstützstellung durch ein Knickgelenk (107) ausklappbar sind, wobei die Stützausleger (106a, 106b) dazu ausgebildet sind, die fahrbare Arbeitsmaschine (100), in einer Abstützstellung abzustützen, wobei das mindestens eine Haltesystem (1) eine Drehwinkelsensoranordnung (2, 2a) zur Erfassung eines Knickwinkels zwischen einem Stützausleger (106a, 106b) und dem Fahrgestell (105) umfasst.

11. Arbeitsmaschine (100) nach einem der Ansprüche 8 bis 10, **dadurch gekennzeichnet, dass** ein Haltesystem (1) derart gekoppelt ist, dass die Drehwinkelsensoranordnung (2, 2a) den Knickwinkel zwischen zwei Maschinenteilen (102, 103a, 103b, 103c, 105, 106a, 106b, 109, 110, 111) erfasst.

12. Arbeitsmaschine (100) nach einem der Ansprüche 8 bis 11, **dadurch gekennzeichnet, dass** ein Haltesystem (1), derart gekoppelt ist, dass die Drehwinkelsensoranordnung (2, 2a) den Knickwinkel an einem Anlenkpunkt (108), an dem Kinematikelemente aus der Gruppe Hydraulikzylinder (109), Druckstange (110) und Umlenkhebel (111) ausgebildete Antriebs- und Koppelglieder (109, 110, 111) angelenkt sind, erfasst und derart ausgebildet ist, den absoluten Knickwinkel zwischen zwei Maschinenteilen (102, 103a, 103b, 103c, 105, 106a, 106b, 109, 110, 111) umzurechnen.

13. Arbeitsmaschine (100) nach einem der Ansprüche 8 bis 12, **gekennzeichnet durch** eine an der Arbeitsmaschine (100) angeordnete Dickstoffpumpe (112), insbesondere Betonpumpe.

## Claims

1. A holding system (1) for a rotational angle sensor assembly (2, 2a) to be held on a work-performing machine (100), wherein the rotational angle sensor assembly (2, 2a) is designed to detect an articulation angle at an articulated joint (104a, 104b, 104c, 107, 108) between two machine parts (102, 103a, 103b, 103c, 105, 106a, 106b, 109, 110, 111, 113), the holding system having
- a first holding element (3) for coupling to a first machine part (102, 103a, 103b, 103c, 105, 106a, 106b, 109, 110, 111, 113), wherein the holding element (3) has a rotational angle sensor (2) of the rotational angle sensor assembly (2, 2a),
- a second holding element (4) for coupling to a second machine part (102, 103a, 103b, 103c, 105, 106a, 106b, 109, 110, 111, 113), wherein the second holding element (4) has at least one position encoder element (2a) of the rotational angle sensor assembly (2, 2a) corresponding to the rotational angle sensor (2), wherein the rotational angle sensor (2) is designed to detect a rotation of the position encoder element (2a) with respect to the rotational angle sensor (2), wherein the first holding element (3) guides the rotational angle sensor (2) rotatably relative to the position encoder element (2a) on the second holding element (4) by means of a guide (5) between the first holding element (3) and the second holding element (4),
**characterised in that**
one of the two holding elements (3, 4) has, as a guide (5), a groove (5a), whereas the other holding element (3, 4) has, as a guide (5), at least one protrusion (5b) engaging in the groove (5a), wherein one of the two holding elements (3, 4) comprises at least two holding element parts (3a, 3b, 4a, 4b), which are arrangeable on the other holding element (3, 4) and surround the latter holding element (3, 4) in an interlocking manner.

2. The holding system (1) according to claim 1, **characterised in that** the holding element parts (3a, 3b, 3c, 3d) are in the form of half-shells.

3. The holding system (1) according to claim 1 or 2, **characterised in that** one of the two holding elements (3, 4) is connected to a driver lever (6).

4. The holding system according to claim 3, **characterised in that** the driver lever (6) has a slot (8).

5. The holding system (1) according to claim 4, **characterised in that** a driver pin (8) is guided in the slot (8) on the driver lever (6), wherein the driver pin (7) is coupleable to one of the two machine parts (102, 103a, 103b, 103c, 105, 106a, 106b, 109, 110, 111).

6. The holding system (1) according to one of claims 1 to 5, **characterised in that** the rotation angle sensor (2) is designed for contactless detection.

7. The holding system (1) according to claim 6, **characterised in that** the rotation angle sensor (2) is formed as a Hall sensor, and the at least one corresponding position encoder element (2a) is formed as a magnet.

8. A work-performing machine (100) having at least one holding system (1) according to one of the preceding claims.

9. The work-performing machine (100) according to claim 8, **characterised by** an articulated mast (101) which can be folded out, comprises a pivoting support (102) that is rotatable about a vertical axis, and comprises a plurality of mast segments (103a, 103b, 103c), wherein each of the mast segments (103a, 103b, 103c) are pivotably connected to the adjacent mast segment (103a, 103b, 103c) or pivoting support (102) via articulated joints (104a, 104b, 104c), wherein the at least one holding system (1) comprises a rotation angle sensor assembly (2, 2a) for detecting an articulation angle between two adjacent mast segments (103a, 103b, 103c) or between one mast segment (103a) and the adjacent pivoting support (102).

10. The work-performing machine (100) according to claim 8 or 9, **characterised by** a chassis (105), a plurality of support arms (106a, 106b) which are each arranged on the chassis (105) and can be folded out, via an articulated joint (107), wholly or partially from a travel position into a support position, wherein the support arms (106a, 106b) are designed, in a support position, to support the movable work-performing machine (100), wherein the at least one holding system (1) comprises a rotation angle sensor assembly (2, 2a) for detecting an articulation angle between a support arm (106a, 106b) and the chassis (105).

11. The work-performing machine (100) according to one of claims 8 to 10, **characterised in that** a holding system (1) is coupled such that the rotation angle sensor assembly (2, 2a) detects the articulation angle between two machine parts (102, 103a, 103b, 103c, 105, 106a, 106b, 109, 110, 111).

12. The work-performing machine (100) according to one of claims 8 to 11, **characterised in that** a holding system (1) is coupled in such a way that the rotation angle sensor assembly (2, 2a) detects the articulation angle at a hinge point (108) at which kinematic elements in the form of drive and coupling members (109, 110, 110) formed from the group of hydraulic cylinders (109), push rods (110) and deflection levers (111) are hinged, and is designed in such a way as to convert the absolute articulation angle between two machine parts (102, 103a, 103b, 103c, 105, 106a, 109, 110, 111).

13. The work-performing machine (100) according to one of claims 8 to 12, **characterised by** a thick-matter pump (112), in particular concrete pump, arranged on the work-performing machine (100).

## Revendications

1. Système de maintien (1) pour un ensemble formant capteur d'angle de rotation (2, 2a) pour la fixation sur un engin de travail (100), dans lequel l'ensemble formant capteur d'angle de rotation (2, 2a) est réalisé pour détecter un angle de flexion sur une articulation de flexion (104a, 104b, 104c, 107, 108) entre deux parties d'engin (102, 103a, 103b, 103c, 105, 106a, 106b, 109, 110, 111, 113), avec
- un premier élément de maintien (3) destiné à être couplé à une première partie d'engin (102, 103a, 103b, 103c, 105, 106a, 106b, 109, 110, 111, 113), dans lequel l'élément de maintien (3) présente un capteur d'angle de rotation (2) de l'ensemble formant capteur d'angle de rotation (2, 2a),
- un deuxième élément de maintien (4) destiné à être couplé à une deuxième partie d'engin (102, 103a, 103b, 103c, 105, 106a, 106b, 109, 110, 111, 113), dans lequel le deuxième élément de maintien (4) présente au moins un élément de détection de position (2a), correspondant au capteur d'angle de rotation (2), de l'ensemble formant capteur d'angle de rotation (2, 2a), dans lequel le capteur d'angle de rotation (2) est réalisé pour détecter une rotation de l'élément de détection de position (2a) par rapport au capteur d'angle de rotation (2), dans lequel le premier élément de maintien (3) guide le capteur d'angle de rotation (2) au moyen d'un guidage (5) formé entre le premier élément de maintien (3) et le deuxième élément de maintien (4) de manière à pouvoir tourner par rapport à l'élément de détection de position (2a) sur le deuxième élément de maintien (4),
**caractérisé en ce**
**qu'**un des deux éléments de maintien (3, 4) présente en tant que guidage (5) une rainure (5a), tandis que l'autre élément de maintien (3, 4) présente en tant que guidage (5) au moins une partie faisant saillie (5b) venant en prise avec la rainure (5a), dans lequel un des deux éléments de maintien (3, 4) comprend au moins deux parties d'élément de maintien (3a, 3b, 4a, 4b), qui peuvent être disposées sur l'autre élément de maintien (3, 4) et renferment par complémentarité de forme le dernier élément de maintien (3, 4).

2. Système de maintien (1) selon la revendication 1, **caractérisé en ce que** les parties d'élément de maintien (3a, 3b, 4a, 4b) sont réalisées en tant que demicoques.

3. Système de maintien (1) selon la revendication 1 ou 2, **caractérisé en ce qu'**un des deux éléments de maintien (3, 4) est relié à un levier d'entraînement (6).

4. Système de maintien (1) selon la revendication 3, **caractérisé en ce que** le levier d'entraînement (6) présente un trou oblong (8).

5. Système de maintien (1) selon la revendication 4, **caractérisé en ce qu'**une tige d'entraînement (8) est guidée dans le trou oblong (8) sur le levier d'entraînement (6), dans lequel la tige d'entraînement (7) peut être couplée à une des deux parties d'engin (102, 103a, 103b, 103c, 105, 106a, 106b, 109, 110, 111).

6. Système de maintien (1) selon l'une quelconque des revendications 1 à 5, **caractérisé en ce que** le capteur d'angle de rotation (2) est réalisé de manière à détecter sans contact.

7. Système de maintien (1) selon la revendication 6, **caractérisé en ce que** le capteur d'angle de rotation (2) est réalisé en tant que capteur à effet Hall et l'au moins un élément de détection de position (2a) correspondant est réalisé en tant qu'aimant.

8. Engin de travail (100) avec au moins un système de maintien (1) selon l'une quelconque des revendications précédentes.

9. Engin de travail (100) selon la revendication 8, **caractérisé par** un mât de flexion dépliable (101), qui comprend un tabouret rotatif (102) pouvant tourner autour d'un axe vertical et une multitude de segments de mât (103a, 103b, 103c), dans lequel les segments de mât (103a, 103b, 103c) sont reliés de manière mobile par pivotement par l'intermédiaire d'articulations de flexion (104a, 104b, 104c) au segment de mât (103a, 103b, 103c) ou au tabouret rotatif (102) respectivement adjacent, dans lequel l'au moins un système de maintien (1) comprend un ensemble formant capteur d'angle de rotation (2, 2a) pour détecter un angle de flexion entre deux segments de mât (103a, 103b, 103c) adjacents ou entre un segment de mât (103a) et le tabouret rotatif (102) adjacent.

10. Engin de travail (100) selon la revendication 8 ou 9, **caractérisé par** un châssis de roulement (105), plusieurs bras d'appui (106a, 106b), qui sont disposés respectivement sur le châssis de roulement (105) et peuvent être déployés par une articulation de flexion (107) depuis une position de déplacement en totalité ou en partie dans une position de soutien, dans lequel les bras d'appui (106a, 106b) sont réalisés pour soutenir l'engin de travail (100) pouvant être déplacé dans une position de soutien, dans lequel l'au moins un système de maintien (1) comprend un ensemble formant capteur d'angle de rotation (2, 2a) pour détecter un angle de flexion entre un bras d'appui (106a, 106b) et le châssis de roulement (105).

11. Engin de travail (100) selon l'une quelconque des revendications 8 à 10, **caractérisé en ce qu'**un système de maintien (1) est couplé de telle manière que l'ensemble formant capteur d'angle de rotation (2, 2a) détecte l'angle de flexion entre deux parties d'engin (102, 103a, 103b, 103c, 105, 106a, 106b, 109, 110, 111).

12. Engin de travail (100) selon l'une quelconque des revendications 8 à 11, **caractérisé en ce qu'**un système de maintien (1) est couplé de telle manière que l'ensemble formant capteur d'angle de rotation (2, 2a) détecte l'angle de flexion sur un point d'articulation (108), sur lequel des organes d'entraînement et de couplage (109, 110, 111) réalisés en tant qu'éléments de cinématique issus du groupe cylindre hydraulique (109), tige de pression (110) et levier de renvoi (111), sont articulés, et est réalisé manière à convertir par calcul l'angle de flexion absolu entre deux parties d'engin (102, 103a, 103b, 103c, 105, 106a, 106b, 109, 110, 111).

13. Engin de travail (100) selon l'une quelconque des revendications 8 à 12, **caractérisé par** une pompe à matières solides (112), en particulier une pompe à béton, disposée sur l'engin de travail (100).
